# EUROPEAN PATENT SPECIFICATION

(11) **EP 0 960 925 B1**
(45) Date of publication and mention of the grant of the patent: **25.08.2004**
(21) Application number: 98109582.1
(22) Date of filing: 26.05.1998
(51) Int. Cl.: C09J 139/00

(54) **Adhesive composition**
Klebmittelzusammensetzung
Composition adhésive

(43) Date of publication of application: 01.12.1999
(73) Proprietor: Showa Denko Kabushiki Kaisha, Tokyo 105-8518 (JP)
(72) Inventor: Tagoshi, Hirotaka, c/o Showa Denko K.K., Chiba-shi, Chiba 267-0056 (JP); Wada, Tetsuo, c/o Showa Denko K.K., Kawasaki-shi, Kanagawa 210-0865 (JP); Yamaguchi, Tetsuhiko, c/o Showa Denko K.K., Kawasaki-shi, Kanagawa 210-0865 (JP)
(74) Representative: Strehl Schübel-Hopf & Partner

(56) References cited:
- GB-A- 1 031 269
- PATENT ABSTRACTS OF JAPAN vol. 098, no. 002, 30 January 1998 & JP 09 263741 A (SEKISUI CHEM CO LTD), 7 October 1997
- PATENT ABSTRACTS OF JAPAN vol. 018, no. 517 (C-1254), 29 September 1994 & JP 06 172740 A (AICA KOGYO CO LTD), 21 June 1994
- DATABASE WPI Section Ch, Week 9244 Derwent Publications Ltd., London, GB; Class A14, AN 92-361977 XP002083193 & JP 04 264182 A (KURARAY CO LTD) , 18 September 1992

## Description

### BACKGROUND ART

### FIELD OF THE INVENTION

The present invention relates to an adhesive composition for sticking a decorative laminate sheet material such as cardboard, cloth, plastic film, fabric or unwoven fabric to a surface of a substrate of construction, furniture, utensils, and the like. The adhesive composition of this invention is excellent in adhesiveness, water resistance, mildewproofing properties over conventional paste adhesive compositions for sticking so that the composition of this invention can be utilized in a wide variety of fields including applications of sticking of decorative laminate sheets in construction, woodworking, dwelling parts of vehicles, vessels.

### DESCRIPTION OF THE RELATED ART

Decorative laminate sheets such as polyvinyl chloride sheets and fabric sheets for use in sticking to gypsum boards (herein, sometimes referred to as "wallpaper" collectively) for domestic use include those of the type which are coated with a rewettable adhesive on their back surface and can exhibit adhesiveness when wetted with water are available commercially. For industrial use, there are available those wallpaper sheets which have no backside paste adhesive on their back surface and can be coated with starch based adhesive before they can be stuck onto a substrate.

Starch based adhesives are advantageous in that they are easy to handle or operate and not so expensive so that they are competitive while they have defects that they tend to be perishable, allow for the growth of fungi and have low resistance to water. Therefore, there have been attempted various improvements which include addition of antiseptics, mildewproofing agents, and water resisting agents. However, such approach is limited in effectiveness since satisfactory effects cannot be expected from antiseptics and mildewproofing agents and use of them in large amounts is harmful. On the other hand, when wallpaper is stuck on the inner walls of concrete or gypsum boards, the paste, which always contains moisture since the substrate of the wall absorbs moisture in the air, causes putrefaction or growth of fungi. As is experienced often, fungi which grow inside reach and are exposed in the joints of wallpaper, thus giving an unpleasant appearance.

Formalin is known as a compound which is effective as antiseptics and mildewproofing agent for starch and most of the commercially available starch paste for wallpaper contain formalin. However, formalin not only is insufficient in antiseptic and mildewproofing activities but also has a problem from hygienic viewpoints; in particular, there is the fear that children and patients suffer poisoning by formalin. Therefore, there has been a keen demand for non-formalin based, highly safe wallpaper paste.

Furthermore, when renewing the wallpaper stuck with starch based paste on a material having not so high a surface strength such as gypsum board, the surface portion of the gypsum board tends to be turned up together with the wallpaper when it is peeled to cause unevenness on the surface of the board, so that new wallpaper cannot be affixed to the surface of the board before the surface of the board is coated with a putty. This results in an increased production cost. Hence, a paste is desired which allows the paper on the surface of the gypsum board to be removed but causes no unevenness on the surface of the gypsum board when the old wallpaper is peeled off.

For this purpose, various aqueous adhesives which can be used in place of starch are under investigation, none of which is put into practice for some defects.

For example, Poval tends to get more viscous and gelled during storage after it is formulated into an aqueous solution having a viscosity high enough to be suitable for sticking wallpaper while sodium polyacrylate in the form of aqueous solution absorbs carbon dioxide gas in the air and involves a large change in viscosity so that it becomes difficult to handle. Hydroxyethylcellulose has insufficient antiseptic properties and mildewproofing properties.

JP-A-09-263 741 discloses an adhesive composition used for manufacturing a paper tube comprising a vinyl acetate resin emulsion obtained by emulsion polymerization either of vinyl acetate alone or together with another ethylenically unsaturated monomer. The emulsion polymerization is carried out in the presence of an aqueous solution of (a) poly(N-vinylacetamide), (b) polyacrylic acid or salts thereof, (c) polyvinyl pyrrolidone and (d) a copolymer of styrene and maleic anhydride or a copolymer of styrene, maleic anhydride and another ethylenically unsaturated monomer or salts thereof.

### OBJECT OF THE INVENTION

Accordingly, an object of this invention is to overcome the defects of the above-described starch based pastes and provide an adhesive composition, especially in a paste form, for sticking decorative laminate sheets containing no harmful substances such as formalin for preventing putrefaction and growth of fungi.

Another object of this invention is to provide an adhesive composition, especially in a paste form, for sticking decorative laminate sheets which is free of defects that it spreads into a material having a limited surface strength such as gypsum board to form stiff solids so that the surface of the material is damaged when wallpaper is renewed and which has resistance to aging and resistance to water.

Still another object of this invention is to provide an adhesive composition, especially in a paste form, for sticking decorative laminate sheets which can be stuck by a conventional method for sticking wallpaper and can be handled with sufficient operability either by machine sticking or by hand sticking.

Yet another object of this invention is to provide a powdery adhesive composition for sticking decorative laminate sheets which is convenient for packaging, storage and transportation and which upon use can be dispersed with ease to form an adhesive composition in a paste form by adding it in water with simple stirring.

### SUMMARY OF THE INVENTION

As a result of intensive investigation in order to overcome the defects of the conventional starch based pastes for sticking wallpaper and provide an adhesive composition for sticking wallpaper having the above-described properties, and as a result, the present inventors have recognized that a paste obtainable by mixing an aqueous solution or dispersion of a polymer comprising a unit derived from at least one of N-vinylamides represented by general formula (1): 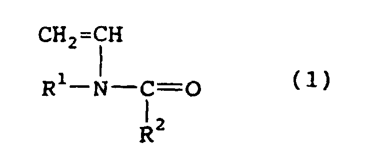 wherein R¹ and R² independently represent a hydrogen atom, a methyl group, or an ethyl group, and a vinyl resin emulsion in a specified ratio exhibits excellent properties.

Also, the present inventors have confirmed that a powdery composition containing powder of a polymer comprising a unit derived from N-vinylamide as a major component and powder obtainable by spray-drying a vinyl resin emulsion (hereafter, referred to as "emulsion powder") is very useful as an adhesive composition for sticking wallpaper which can be used as a paste only by adding it in water with stirring. Thus, this invention has been completed.

That is, this invention provides the following adhesive compositions.
(1) An adhesive composition obtainable by mixing an aqueous solution or dispersion of a polymer comprising a unit derived from at least one of N-vinylamides represented by general formula (1): 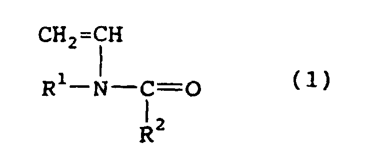 wherein R¹ and R² independently represent a hydrogen atom, a methyl group, or an ethyl group, and a vinyl resin emulsion in a solids weight ratio of 5:95 to 65:35.
(2) The adhesive composition as described in (1), above, wherein the N-vinylamide is N-vinylacetamide.
(3) The adhesive composition as described in (1) or (2) above, wherein said composition comprises an aqueous solution containing the polymer comprising a unit derived from N-vinylamide as a major component and the vinyl resin emulsion in a solids weight ratio of 5:95 to 65:35.
(4) An adhesive composition comprising powder of a polymer comprising a unit derived from at least one of N-vinylamides represented by general formula (1): 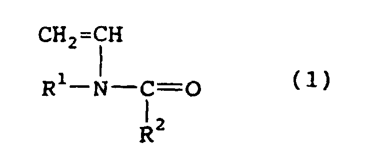 wherein R¹ and R² independently represent a hydrogen atom, a methyl group, or an ethyl group, as a major component and powder obtainable by spray-drying a vinyl resin emulsion in a solids weight ratio of 5:95 to 65:35 and wherein said composition is converted into an aqueous solution upon use.
(5) The adhesive composition as described in any one of (1) to (4) above , wherein the polymer comprising a unit derived from N-vinylamide as a major component is an N-vinylamide homopolymer or a copolymer of N-vinylamide with at least one monomer selected from the group consisting of acrylic acid and its salts, methacrylic acid and its salts, acrylic acid ester, methacrylic acid ester, acrylonitrile, acrylamide, methacrylamide, 2-acrylamide-2-methylpropanesulfonic acid and its salts, vinylether, and vinyl carboxylate.
(6) The adhesive composition as described in any one of (1) to (5) above, wherein the polymer comprising a unit derived from N-vinylamide as a major component is a cross-linked N-vinylamide homopolymer or a cross-linked copolymer of N-vinylamide with at least one monomer selected from the group consisting of acrylic acid and its salts, methacrylic acid and its salts, acrylic acid ester, methacrylic acid ester, acrylonitrile, acrylamide, methacrylamide, 2-acrylamide-2-methylolpropane-sulfonic acid and its salts, vinylether, and vinyl carboxylate.
(7) The adhesive composition as described in any one of (1) to (6) above, wherein the vinyl resin emulsion is an emulsion of a homopolymer of vinyl acetate or an emulsion of a copolymer of vinyl acetate with at least one monomer selected from the group consisting of acrylic acid ester, methacrylic acid ester, acrylamide, vinyl alkylcarboxylate containing alkyl group having 3 to 10 carbon atoms, and ethylene.
(8) The adhesive composition as described in any one of (1) to (7) above, wherein the vinyl resin emulsion is an emulsion of a homopolymer of acrylic acid ester or methacrylic acid ester or an emulsion of a copolymer of these, or an emulsion of a copolymer of acrylic acid ester and/or methacrylic acid ester with at least one monomer selected from the group consisting of styrene, acrylamide, methacrylamide and acrylonitrile.
(9) The adhesive composition as described in. any one of (1) to (8) above, wherein the composition contains 0.1 to 30% by weight of a filler based on the sum of the total solids content weight of the polymer comprising a unit derived from N-vinylamide as a major component and the vinyl resin emulsion.
(11) The adhesive composition as described in any one of (1) to (9) above as one for sticking decorative laminate sheets.

### DETAILED DESCRIPTION OF THE INVENTION

Hereafter, the adhesive composition for sticking decorative laminate sheets according to this invention will be described in greater detail.

In this invention, "N-vinylamide" used as a monomer is at least one of N-vinylamides represented by general formula (1) below: 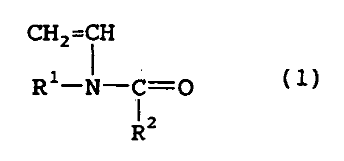 wherein R¹ and R² independently represent a hydrogen atom, a methyl group or an ethyl group.

More specifically, there can be cited, for example, N-vinylformamide, N-methyl-N-vinylformamide, N-vinylacetamide, N-methyl-N-vinylacetamide, N-vinylpropionamide, N-methyl-N-vinylpropionamide, N-ethyl-N-vinylformamide, N-ethyl-N-vinylacetamide, and N-ethyl-N-vinylpropionamide. Particularly preferred is N-vinylacetamide.

Hereafter, this invention will be described taking N-vinylacetamide as an example.

In the adhesive composition of this invention, the polymer comprising a unit derived from N-vinylacetamide (hereinafter, referred to as "Polymer") is blended with the vinyl resin emulsion in a solids content weight ratio of 5:95 to 65:35. If the ratio of the Polymer is greater than the above, the adhesive composition has a decreased water resistance. On the other hand, the amount of the Polymer is smaller than the above, the adhesive composition has a decreased viscosity so that its operability decreases.

In blending, a 2 to 50% aqueous solution or dispersion of the Polymer and a vinyl resin emulsion having a solids content 10 to 60% are mixed such that the mixed composition contains the components in a ratio (weight basis) as solids taking the sum of the both components as 100 (parts by weight) of 5-65:95-35. Mixing can be performed simply with a conventional stirrer at room temperature.

When the filler described later on is added, powder of the filler or dispersion of the filler in water is added to a mixture of an aqueous solution or dispersion of the Polymer with a vinyl resin emulsion, followed by stirring with a homogenizing mixer for sufficient dispersing.

The Polymer which can be used in this invention is suitably one which has a viscosity in the ranges of 100 to 200,000 mPa·s as measured as a 1% aqueous solution or dispersion using Type B rotation viscometer at 20°C and at 20 rpm.

Further, in order to increase the thixotropic properties or water resistance, the Polymer may be a copolymer further containing at least one unit derived from at least one monomer selected from various monomers selected from acrylic acid and its salts, methacrylic acid and its salts, acrylic acid ester, methacrylic acid ester, acrylonitrile, acrylamide, methacrylamide, 2-acrylamide-2-methylpropane-sulfonic acid and its salts, vinylether, and vinyl carboxylate. Also, in order to reduce the stringiness of the adhesive composition in a paste form and improve the operability of applying the paste onto wallpaper, cross-linked N-vinylacetamide homopolymer or copolymer obtained by polymerization or copolymerization in the presence of a cross-linking agent containing 2 or more polymerizable double bonds in the molecule. When such cross-linked N-vinylacetamide copolymers are used, the amount of the polymer to be added can be reduced to a greater extent; compositions which retain viscosity high enough not to decrease their operability for sticking wallpaper can be prepared by using them in amounts less than 10:90 as a solid content weight ratio of the Polymer to the vinyl resin emulsion (cf. Example 6 below).

Specific examples of the cross-linking agent include compounds having plural (meth)acrylic groups such as N,N'-methylenebisacrylamide, ethylene glycol di(meth)acrylate, triethylene glycol di(meth)acrylate, and pentaerythritol tri(meth)acrylate, N,N'-alkylenebis(N-vinylcarboxamide) compounds such as N,N'-butylenebis(N-vinylacetamide), and N,N'-diacetyl-N,N'-divinyl-1,4-bisaminomethylcyclohexane; compounds having 2 or more aryl groups such as diethylene glycol diaryl ether, trimethylolpropane triaryl ether, tetraaryloxyethane, pentaerythritol triaryl ether, diaryl adipate, and diaryl terephthalate; compounds having 2 or more vinyl groups such as divinylbenzene; compounds having 2 or more vinyl ester structures such as divinyl oxalate, divinyl succinate, divinyl malonate, divinyl adipate, divinyl maleate, trivinyl citrate, and tetravinyl pyromellitate; and the like. They can be used alone or as admixtures of two or more of them.

The Polymers can be prepared by conventionally used aqueous solution polymerization, reverse phase suspension polymerization, and precipitation polymerization. The solvents used may be selected suitably depending on the polymerization method used and include water, alcohols, hexane, ethyl acetate and the like.

Polymerization initiators which may be used in the preparation of the above-described polymers include those known in the art, such as peroxides, organic peracids, . inorganic peracids or salts thereof, azobis compounds alone, or redox systems containing peroxides and reducing agents in combination, Particularly preferred among them are azobis based initiators such as azobisisobutyronitrile, azobis(2-aminodipropane) dihydrochloride.

Polymerization initiating temperature is usually about -10 to 80°C and reaction time is about 30 minutes to 30 hours.

The particle diameter of the Polymer used in the adhesive composition is not limited particularly but it is preferred that the average particle size range from 1 to µm. With a particle diameter above 100 µm, it takes a long time for dissolution and dispersion while with a particle diameter below 1 µm, the powder has a small bulk density and tends to be scattered, thus making it difficult to handle.

In order to obtain a desired particle diameter, the resulting water-containing mass is dried and pulverized in the case of aqueous solution polymerization, In reverse phase polymerization, the resulting bead-shaped product is filtered and dried, followed by optional pulverization. Further, in precipitation polymerization, the precipitates which deposited are filtered and dried. Upon use, an aqueous solution is prepared therefrom.

The vinyl resin emulsion may be prepared by emulsion polymerization of vinyl monomers.

As the vinyl monomer, there can be used vinyl acetate, vinyl propionate, vinyl esters of a branched chain alkylcarboxylic acid containing alkyl group having 9 to 10 carbon atoms, vinyl carboxylates such as vinyl palmitate and vinyl stearate, acrylic acid esters such as methyl acrylate, ethyl acrylate, butyl acrylate, 2-ethylhexyl acrylate, glycidyl acrylate, hydroxyethyl acrylate, hydroxypropyl acrylate, ethylene glycol acrylate, diethylene glycol acrylate, polyethylene glycol acrylate, propylene glycol acrylate, dipropylene glycol acrylate, polypropylene glycol acrylate, butanediol acrylate, trimethylolpropane acrylate, and pentaerythritol acrylate, methacrylic acid esters such as methyl methacrylate, ethyl methacrylate, butyl methacrylate, 2-ethylhexyl methacrylate, glycidyl methacrylate, hydroxyethyl methacrylate, hydroxypropyl methacrylate, ethylene glycol methacrylate, diethylene glycol methacrylate, polyethylene glycol methacrylate, propylene glycol methacrylate, dipropylene glycol methacrylate, polypropylene glycol methacrylate, butanediol methacrylate, trimethylolpropane methacrylate, and pentaerythritol methacrylate, styrene, acrylamide, methacrylamide, acrylonitrile, acrylic acid, and methacrylic acid. Emulsions of homopolymers or copolymers of monomers selected from these monomers may be used.

Emulsions are prepared by emulsion polymerization of the above-described monomers.

Preferred monomers and their combinations are as follows.
(a) vinyl acetate alone,
(b) a combination of vinyl acetate and a vinyl ester of branched chain alkylcarboxylic acid containing alkyl group having 9 to 10 carbon atoms,
(c) a combination of vinyl acetate and ethylene,
(d) butyl acrylate, methyl methacrylate, methacrylic acid, hydroxyethyl methacrylate,
(e) 2-ethylhexyl acrylate, butyl methacrylate, styrene, glycidyl methacrylate, acrylamide, methacrylic acid.

The above are exemplary and this invention is not limited to these formulations.

Polymerization may be conventional emulsion polymerization, in which an aqueous solution having dissolved therein a polymerization initiator, an emulsifying agent, and a protective colloid is stirred and heated, with a monomer or monomers being dripped down or charged from the beginning for reaction.

There can be used water soluble polymerization initiators such as potassium persulfate and hydrogen peroxide as the polymerization initiator; surfactants such as sodium alkylbenzensulfonate, polyethylene glycol alkyl ether, and sodium polyethylene glycol nonylphenylsulfonate as the emulsifying agent; protective colloids such as polyvinyl alcohol, polyacrylamide, a water-soluble copolymer of acrylic acid ester and acrylic acid. The concentration as solids content of the vinyl resin emulsion thus prepared is suitably 30 to 60% by weight.

The aqueous solution or optionally dispersion of the Polymer and the vinyl resin emulsion are blended in a solids content weight ratio in the ranges of 5:95 to 65:35, preferably 20:80 to 60:40. For example, when 50 parts by weight of a 5% aqueous solution of the Polymer and 5 parts by weight of a 50% vinyl acetate resin emulsion are mixed, the resulting mixture contains the Polymer and the vinyl acetate resin in a solids content weight ratio of 50:50.

If the solids content weight ratio of the Polymer and the vinyl resin is outside the range of 5:95 to 65:35, the adhesiveness is deteriorated. More specifically, if the ratio of the Polymer is greater than the above, the adhesive composition in a paste form not only has a poor adhesion but also has a decreased water resistance, so that wallpaper tends to peel off spontaneously on days when it is humid. On the other hand, if the ratio of the Polymer is smaller than the above, the viscosity of the paste is too low for operation so that it is difficult to coat the paste uniformly on wallpaper.

When mixing the both components, an aqueous solution of the Polymer is charged in a vessel, to which is added a vinyl resin emulsion with stirring. This enables uniform mixing.

Addition of a filler to this paste mixture often results in an improved operability as a paste. Addition of the filler elevates viscosity and increases thixotropy so that blocking when the paste is dry can be prevented and increases the heat resistance of the adhesive composition in a paste form and in some occasions increases adhesion.

As the filler to be added to the adhesive composition in a paste form for sticking wallpaper, there can be used powder of calcium carbonate, magnesium carbonate, clay, talc, mica, aluminum hydroxide, aluminum oxide, silica, cellulose, and the like. Of these, aluminum hydroxide is effective for imparting the composition with thixotropic properties.

The amount of the filler to be added is 0.1 to 30% by weight, desirably 0.5 to 20% by weight, based on the total paste (as solids). If the amount of the filler exceeds 30% by weight, the adhesion of the paste decreases and the viscosity of the adhesive composition in a paste form increases so that it is difficult to coat it. If the amount of the filler is below 0.1% by weight, there is observed no improving effect of the filler on the viscosity, anti-blocking properties, heat resistance and the like.

The filler is mixed in the following way. That is, the filler is added to the aqueous solution or optionally dispersion of the Polymer or the vinyl resin emulsion, or to a blend of the both, and the resulting mixture is stirred in order to mix uniformly. In the case of the filler which is difficult to disperse in water, powder of the filler is added to water having dissolved therein a dispersant in advance, and the mixture is well kneaded to disperse the filler uniformly. This is added to the paste solution.

To the paste material thus prepared may be added defoaming agents, leveling agents, antiseptics, and/or mildewproofing agents. Also, stabilizers such as soda ash may be added.

Decorative laminate sheets can be stuck with the adhesive composition in a paste form of this invention in the same manner as conventional starch pastes.

The adhesive composition in a paste form of this invention is coated on the back of a polyvinyl chloride sheet, woven fabric sheet or the like and the sheet is applied and pressed lightly onto the surface of the substrate for about 5 minutes when sufficient bonding can be obtained.

The amount of the adhesive composition in a paste form to be coated may vary depending on the solids content but is usually in the ranges of 100 to 500 g/m². The substrates on which decorative laminate sheets are stuck include gypsum board, mortar-finished concrete, interior parts of a building, e.g., walls, ceilings, doors, partition walls, such as plywood. The adhesive composition in a paste form of this invention can also be applied to surfacing materials such as metal, plastics, woven fabrics, unwoven fabrics, wood or coated surface, interior trims of vessels or cars, furniture, fittings, and utensils.

The paste material of this invention can be coated to decorative laminate sheets manually with a brush or by machine coating using a roll coater or the like. The decorative laminate sheets coated with the paste material may be stuck as they are. Besides this method, there is also a method in which an endless decorative laminate sheet coated with the paste material of this invention is folded so that the coated surfaces contact each other and placed in a packaging material such as bag made of polyethylene film in order to avoid evaporation of water in the paste material and after transportation and storage the decorative laminate sheet is taken out from the bag and cut to a suitable size, if desired, in situ, and then stuck.

The adhesive composition in a paste form of this invention is excellent in adhesion, water resistance, and aging resistance as required for sticking decorative laminate sheets and is antiseptic and prevents growth of fungi. In particular, when sued for sticking onto materials having relatively low surface strength, such as gypsum boards, the paste material penetrates into the inside of the substrate and stiffen the surface layer of the substrate, so that when the wallpaper is peeled off from the gypsum board for renewal, for example, there is no fear that the surface layer of the gypsum board will be peeled off together to damage the surface of the substrate; the adhesive composition in a paste form of this invention has the feature that use of it enables new decorative laminate sheets to be stuck as they are without requiring smoothing of the surface with a putty.

### Powdery composition

Powder agent prepared from the above-described adhesive composition in a paste form, that is, the composition which includes powder of the Polymer (hereafter, referred to as "PNVA powder") and the powder obtainable by spray-drying the vinyl resin emulsion (hereafter, referred to as "emulsion powder"), and optionally the above-described filler or defoaming agent and the like, is convenient for packaging, storage and transportation, and is useful since upon use, it can be dispersed with ease by adding it to water with simple stirring.

In such powdery compositions, the PNVA powder and the emulsion powder are blended in a weight ratio of 5:95 to 65:35.

The PNVA powder and the emulsion powder may be mixed together in a conventional blender to prepare a powdery composition with ease.

In order to prepare a composition containing the above-described filler, the filler powder may be mixed in amounts of 0.1 to 30% by weight based on the total weight of the PNVA powder and the emulsion powder upon blending the both powders.

### Emulsion Powder

The emulsion powder can be prepared by spray-drying the vinyl resin emulsion.

An example of spray-drying of emulsions is described in U.S. Patent No. 2,800,463 (1957) and more specifically, an emulsion is sprayed with compressed air from the upper part of a cylindrical drier to form fine particles, which are kept at 60 to 90°C in the drier to remove moisture and flew down to the bottom part of the drier, where cool air is supplied so that the dried particles are prevented from melt-bonding each other. From the bottom part of the drier is taken out emulsion powder and charged into a bag through a cyclone.

The emulsion powder thus obtained preferably has a particle diameter of 0.1 to 10 µm and dispersed in water with ease when it is added to water and stirred to form an emulsion having adhesive properties.

It is preferred that the particle diameter of the emulsion powder be 0.1 to 10 µm. Powder with a particle diameter of 0.1 *µ*m or less is difficult to produce by spray-drying in practice while powder with a particle diameter above 10 µm is difficult to be dispersed again when stirred in water so that it is difficult to use as a paste. The particle diameter of PNVA is not limited particularly but desirably it is 1 to 100 µm.

### BEST MODE FOR CARRYING OUT THE INVENTION

This invention will be described in detail by examples but this invention is not limited thereto.

### Example 1

30 g of N-vinylacetamide homopolymer (viscosity of 1% aqueous solution at 20°C and at 20 rpm using a Type B rotatry viscometer being 400 mpa·s) was dissolved in 470 g of water to prepare a 6% aqueous solution, to which was added 60 g of polyvinyl acetate emulsion (prepared by using polyvinyl alcohol as protective colloid and having a viscosity of 32,000 mpa·s in a concentration of 50% and at 30°C ) and stirred to mix uniformly. To this was added 10 g of silica powder with an average particle diameter of 0.2 µm and kneaded to prepare a paste composition for sticking wallpaper.

The paste composition was coated uniformly on the back surface of polyvinyl chloride wallpaper on a basis weight of 200 g/m² and the wallpaper was stuck on a gypsum board immediately. After standing at room temperature for 1 hour, the peel strength was measured according to JIS K6854 to be 700 g/25 mm.

When the wallpaper was peeled off after 60 days, the paste composition was removed together with the backing paper of the gypsum board so that no unevenness was observed on the surface of the gypsum board.

Further, the paste composition was left to stand at 30°C in the air for 1 month. Although the paste adhesive composition for sticking wallpaper according to this invention contained no formalin (formaldehyde), the paste adhesive material showed no abnormality on its surface. On the other hand, a commercially available starch paste material for sticking wallpaper suffered from growth of black mildew on its surface. From the commercially available starch paste material was detected 0.2% formaldehyde.

### Example 2

50 g of N-vinylacetamide homopolymer (viscosity of 1% aqueous solution at 20°C and at 20 rpm using a Type B rotary viscometer being 350 mPa·s ) was dissolved in 450 g of water to prepare a 10% aqueous solution, to which was added 60 g of copolymer of polyvinyl acetate with ethylene emulsion (emulsion polymer prepared by using emulsifying agent and having a viscosity of 35,000 mPa·s in a concentration of 55% and at 30°C , monomer ratio of vinyl acetate and ethylene being 86:14 by weight) and stirred to mix uniformly. To this was added 8 g of pulp powder with an average particle diameter of 0.5 mm and kneaded to prepare a paste composition for sticking wallpaper. The paste composition was coated uniformly on the back surface of plain weave fabric wallpaper on a basis weight of 300 g/m² and the wallpaper was stuck on a plywood ceiling immediately. After standing at room temperature for 1 hour, the peel strength measured according to JIS K6854 was 820 g/25 mm. Although the paste composition for sticking wallpaper contained no formalin, there was observed no growth of fungi after standing at room temperature for 1 month.

### Example 3

25 g of N-vinylacetamide homopolymer (viscosity of 1% aqueous solution at 20°C and at 20 rpm using a Type B rotary viscometer being 700 mPa·s) was dissolved in 475 g of water to prepare a 5% aqueous solution, to which was added 60 g of acrylic based emulsion having a monomer composition of butyl acrylate methyl methacrylate : hydroxyethyl methacrylate : methacrylic acid = 48 : 40 : 10 : 2 by weight and having a viscosity of 1,600 mpa·s in a concentration of 55% and at 30°C , and stirred to prepare a uniform mixture.

This paste material was coated on the back surface of polyvinyl chloride wallpaper on a basis weight of 200 g/m² using a roll coater, and the wallpaper was folded using a folding machine to a length of 1 m so that the surfaces coated with the paste material contacted each other and wrapped by polyethylene sheet, and the ends thereof were heat sealed for storage. After 1 week, the package was unsealed and the wallpaper was stuck on the surface of mortar-finished concrete. The peel strength after 1 hour was 590 g/25mm.

### Example 4

42 g of N-vinylacetamide/sodium acrylate =90/10 (by weight) copolymer (viscosity of 1% aqueous solution at 20°C and at 20 rpm using a Type B rotary viscometer being 730 mPa·s, average particle diameter of 80 µm) was dissolved in 658 g of water to prepare a 6% aqueous solution, to which was added 80 g of styrene/acrylic copolymer emulsion [having a monomer composition of styrene : butyl acrylate : isobutyl methacrylate : glycidyl methacrylate : hydroxypropyl methacrylate:methacrylic acid = 30:48:10:6:4:2 by weight and having a viscosity of 2,300 mPa·s in a concentration of 50% and at 30°C , and stirred to prepare a uniform mixture (aqueous dispersion). To this mixture were added 40 g of calcium carbonate powder and 8 g of pulp powder and the mixture was kneaded well to prepare a paste composition for sticking wallpaper. This was coated on the back surface of polyvinyl chloride wallpaper on a basis weight of 200 g/m², and the wallpaper was immediately stuck on a gypsum board. The peel strength after 1 hour was 780 g/2.5cm.

### Example 5

720 g of a cross-linked polymer of N-vinylacetamide [N-vinylacetamide/N,N'-diacetyl-N,N'-divinyl-1,4-bisaminomethylcyclohexane=100/3 (by weight); viscosity of 1% aqueous dispersion at 20°C and at 20 rpm using a Type B rotary viscometer being 200 mPa·s] was dispersed in 16,790 g of water to prepare a 4.1% aqueous dispersion, to which was added 2,270 g of a polyvinyl acetate emulsion [Polysol 2070L, manufactured by Showa Kobunshi, Co., Ltd., viscosity measured at 30°C and at 10 rpm in a concentration of 47% using Type B rotary visocometer being 5,000 mPa·s] and stirred to mix uniformly. To this was added 250 g of silica powder with an average particle diameter of 0.2 µm and kneaded to prepare a paste composition for sticking wallpaper.

This paste composition was coated uniformly on the back surface of polyvinyl chloride wallpaper on a basis of 160 g/m² and the wallpaper was immediately stuck on a gypsum board. The peel strength after standing at room temperature for 1 hour was 690 g/25 mm.

The wallpaper stuck with the paste composition for sticking wallpaper thus prepared did not allow the growth of fungi after 1 year.

### Example 6

100 g of a cross-linked copolymer containing N-vinylacetamide as a major monomer component [N-vinylacetamide/acrylic acid/N,N'-diacetyl-N,N'-divinyl-1,4-bisaminomethylcyclohexane=70/30/3 (by weight); viscosity of 1% aqueous dispersion neutralized with sodium hydroxide, at 20°C and at 20 rpm using a Type B rotary viscometer being 200,000 mPa^{·}s] was dispersed in 1,740 g of water to prepare a 5.4% aqueous dispersion, to which was added 2,270 g of a polyvinyl acetate emulsion [Polysol 2070L, manufactured by Showa Kobunshi, Co., Ltd., viscosity measured at 30°C and at 10 rpm in a concentration of 47% using Type B rotary visocometer being 5,000 mpa·s] and stirred to mix uniformly. To this was added 250 g of silica powder with an average particle diameter of 0.2 µm. Thereafter, this was mixed with a solution of 18 g of sodium bicarbonate in 100 g of water and stirred for 1 hour to prepare a paste composition for sticking wallpaper.

This paste composition was coated uniformly on the back surface of polyvinyl chloride wallpaper on a basis of 200 g/m² and the wallpaper was immediately stuck on a gypsum board. The peel strength after standing at room temperature for 1 hour was 740 g/25mm.

The wallpaper stuck with the paste composition for sticking wallpaper thus prepared did not allow the growth of fungi after 1 year.

### Example 7

46 g of PNVA (homopolymer of N-vinylacetamide, having a viscosity of 1% aqueous solution measured at 20°C and at 20 rpm using a Type B rotary viscometer being 400 mPa·s and an average particle diameter of 10 µm), 52 g of polyvinyl acetate emulsion powder with an average particle diameter of 2 µm (Movinyl Powder DM200, manufactured by Hoechst Gosei Co., Ltd.) , and 2 g of silica powder with an average particle diameter of 0. 2 µm were stirred and mixed uniformly in a blender to prepare a powdery composition for sticking wallpaper. 1 part by weight of this composition was added to 20 parts by weight of water and stirred for about 5 minutes to effect dissolution and/or dispersion to obtain a paste solution for sticking.

The paste solution was coated uniformly on the back surface of polyvinyl chloride wallpaper on a basis of 200 g/m² and the wallpaper was stuck immediately on gypsum board. The peel strength after standing at room temperature for 1 hour was 740 g/25mm. When the wallpaper was peeled off after 60 days, the paste was removed together with the backing paper of the gypsum board so that no unevenness was observed on the surface of the gypsum board.

The paste composition for sticking wallpaper showed no change in its performance after storage for 1 month and the paste solution obtained from the composition for sticking wallpaper of this invention was almost odorless and no aldehyde was detected therefrom.

The wallpaper stuck with the paste composition for sticking wallpaper according to this invention showed no growth of fungi after 1 year.

On the other hand, with a commercially available starch paste, 0.2% formaldehyde was detected and after 3 months, there grew black mildew over the entire surface of the paste.

### Example 8

35 g of PNVA (homopolymer of N-vinylacetamide, having a viscosity of 1% aqueous solution measured at 20°C and at 20 rpm using a Type B rotary viscometer being 350 mpa·s and an average particle diameter of 20 µm), 62 g of a copolymer emulsion powder with an average particle diameter of 1 µm (Movinyl Powder SA, manufactured by Hoechst Gosei Co., Ltd.) from vinyl ester of a branched chain alkylcarboxylic acid containing alkyl group having 10 carbon atoms (VeoVa 10, manufactured by Shell Inc.) and vinyl acetate, and 3 g of pulp powder with an average particle diameter of 0.5 µm were stirred and mixed uniformly in a blender to prepare a powdery composition for sticking wallpaper. 1 part by weight of this composition was added to 15 parts by weight of water and stirred for about 20 minutes to effect dissolution and/or dispersion to obtain a paste solution for sticking.

The paste composition was coated uniformly on the back surface of plain weave fabric wallpaper on a basis weight of 300 g/m² and the wallpaper was stuck on a plywood ceiling immediately. After standing at room temperature for 1 hour, the peel strength measured according to JIS K6854 was 850 g/25 mm. No formalin was detected from the paste composition for sticking wallpaper and there was observed no growth of fungi on the wallpaper thus stuck after 1 year.

### Example 9

47 g of PNVA (homopolymer of N-vinylacetamide, having a viscosity of 1% aqueous solution measured at 20°C and at 20 rpm using a Type B rotary viscometer being 700 mPa·s and an average particle diameter of 5 µm) and 53 g of acrylic emulsion powder were stirred and mixed uniformly in a blender to prepare a powdery composition for sticking wallpaper. The acrylic emulsion powder was prepared by spray-drying an emulsion of a copolymer from butyl acrylate, methyl methacrylate, hydroxyethyl methacrylate, and methacrylic acid in a monomer ratio by weight of 48:40:10:2, and the average particle diameter was 1.5 µm.

1 part by weight of the composition was added to 13 parts by weight of water and stirred for dissolution and/or dispersion to prepare a paste solution for sticking wallpaper. The paste solution was coated on the back surface of polyvinyl chloride wallpaper on a basis weight of 200 g/m² using a roll coater, and the wallpaper was folded using a folding machine to a length of 1 m so that the surfaces coated with the paste material contacted each other and wrapped by polyethylene sheet, and the ends thereof were heat sealed for storage. After 1 week, the package was unsealed and the wallpaper was stuck on the surface of mortar-finished concrete. The peel strength after 1 hour was 670 g/25mm.

### Example 10

42 g of PNVA (copolymer of N-vinylacetamide/sodium acrylate=90/10 (by weight), having a viscosity of 1% aqueous solution measured at 20°C and at 20 rpm using a Type B rotary viscometer being 730 mPa·s and an average particle diameter of 80 *µ*m), 54 g of styrene/acrylic emulsion powder, calcium carbonate with an average particle diameter of 0.5 µm, and 2 g of pulp powder with an average particle diameter of 0.5 mm were mixed uniformly in a blender to prepare a powdery composition for sticking wallpaper. The styrene/acrylic emulsion powder was prepared by spray-drying an emulsion of a copolymer from styrene, butyl acrylate, isobutyl methacrylate, glycidyl methacrylate, hydroxypropyl methacrylate, and methacrylic acid in a monomer ratio by weight of 30:48:10:6:4:2, and the average particle diameter was 0.9 µm.

1 part by weight of the composition was added to 20 parts by weight of water and stirred for dissolution and/or dispersion to prepare a paste solution for sticking wallpaper. The paste solution was coated on the back surface of polyvinyl chloride wallpaper on a basis weight of 200 g/m² and the wallpaper was immediately coated on a gypsum board. The peel strength after 1 hour was 760 g/25mm.

### Example 11

720 g of PNVA (a cross-linked polymer of N-vinylacetamide/N,N'-diacetyl-N,N'-divinyl-1,4-bisaminomethylcyclohexane=100/3(by weight); viscosity of 1% aqueous dispersion at 20°C and at 20 rpm using a Type B rotary viscometer being 200 mPa^{·}s, an average particle diameter being 7 *µ*m), 711g of polyvinyl acetate emulsion powder (Movinyl Powder DM200, manufactured by Hoechst Gosei Co., Ltd.), 356 g of a copolymer emulsion powder (Movinyl Powder SA, manufactured by Hoechst Gosei Co., Ltd.), and 18 g of baking powder were stirred and mixed uniformly in a blender to prepare a powdery composition for sticking wallpaper. 1 part by weight of this composition was added to 10 parts by weight of water and stirred for about 1 hour to prepare a paste solution for sticking.

This paste solution was coated uniformly on the back surface of polyvinyl chloride wallpaper on a basis of 160 g/m² and the wallpaper was immediately stuck on a gypsum board. The peel strength after standing at room temperature for 1 hour was 720 g/25mm.

The composition for sticking wallpaper thus prepared showed no change in its performance after storage for 1 year and there was observed no growth of fungi on the wallpaper thus stuck after 1 year.

### Example 12

100 g of PNVA (a cross-linked polymer of N-vinylacetamide/acrylic acid/N,N'-diacetyl-N,N'-divinyl-1,4-bisaminomethylcyclohexane=70/30/3 (by weight); viscosity of 1% aqueous dispersion neutralized with sodium hydroxide, at 20°C and at 20 rpm using a Type B rotary viscometer being 200,000 mPa·s , an average particle diameter being 5 µm), 711g of polyvinyl acetate emulsion powder (Movinyl Powder DM200, manufactured by Hoechst Gosei Co., Ltd.), and 356 g of a copolymer emulsion powder (Movinyl Powder SA, manufactured by Hoechst Gosei Co., Ltd.) were stirred and mixed uniformly in a blender to prepare a powdery composition for sticking wallpaper. 1 part by weight of this composition was added to 16 parts by weight of water and stirred for about 20 minutes and a solution of 18 g of baking powder in 100 g of water was added and the mixture was stirred for 1 hour to prepare a paste solution for sticking.

This paste solution was coated uniformly on the back surface of polyvinyl chloride wallpaper on a basis of 200 g/m² and the wallpaper was immediately stuck on a gypsum board. The peel strength after standing at room temperature for 1 hour was 780 g/25mm.

The composition for sticking wallpaper thus prepared showed no change in its performance after storage for 1 year and there was observed no growth of fungi on the wallpaper thus stuck after 1 year.

### INDUSTRIAL APPLICABILITY

The adhesive composition in a paste form for sticking decorative laminate sheets according to this invention is excellent in antiseptic properties and mildewproofing properties without requiring addition of formalin (formaldehyde) which is highly toxic and which has been used to overcome problems, i.e., prevention of putrefaction and growth of fungus, involved in starch based paste materials for use in sticking conventional sheets professionally used.

Further, the adhesive composition in a paste form for sticking decorative laminate sheets according to this invention allows the penetration of the paste material into the inside of the substrate to form a stiff surface layer even for materials having not so high a surface strength, such as gypsum boards, so that wallpaper can be peeled off from the surface of the substrate without damaging it.

Furthermore, the adhesive composition in a paste form for sticking decorative laminate sheets according to this invention is an adhesive composition in a paste form which shows no change in viscosity even after an adhesive composition in a paste form is prepared and has a long pot life and storage stability, which can be stored for long period of time even after coating when the coated material is packaged with sealing, and which is excellent in water resistance.

The adhesive composition in a paste form of this invention can be applied as it is in conventional manual coating or machine coating, and exhibits excellent operability.

Further, the composition in a powder form of this invention is convenient for packaging, storage, and transportation and when in use, it can be used as a paste since it can be dispersed with ease only by adding it to water and simply stirring, which is very useful.

## Claims

1. An adhesive composition obtainable by mixing an aqueous solution or dispersion of a polymer comprising a unit derived from at least one of N-vinylamides represented by general formula(1): 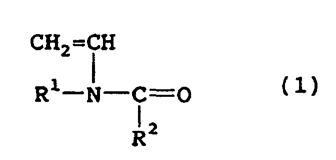 wherein R¹ and R² independently represent a hydrogen atom, a methyl group, or an ethyl group, and a vinyl resin emulsion in a solids weight ratio of 5:95 to 65:35.

2. The adhesive composition as claimed in claim 1, wherein the N-vinylamide is N-vinylacetamide.

3. The adhesive composition as claimed in claim 1 or 2, wherein said composition comprises an aqueous solution containing the polymer comprising a unit derived from N-vinylamide as a major component and the vinyl resin emulsion in a solids weight ratio of 5:95 to 65:35.

4. The adhesive composition comprising powder of a polymer comprising a unit derived from at least one of N-vinylamides represented by general formula(1): 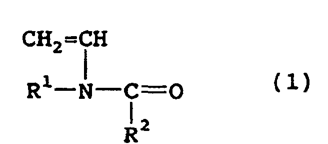 wherein R¹ and R² independently represent a hydrogen atom, a methyl group, or an ethyl group, as a major component and powder obtainable by spray-drying a vinyl resin emulsion in a solids weight ratio of 5:95 to 65:35 and wherein said composition is converted into an aqueous solution upon use.

5. The adhesive composition as claimed in any one of claims 1 to 4, wherein the polymer comprising a unit derived from N-vinylamide as a major component is an N-vinylamide homopolymer or a copolymer of N-vinylamide with at least one monomer selected from the group consisting of acrylic acid and its salts, methacrylic acid and its salts, acrylic acid ester, methacrylic acid ester, acrylonitrile, acrylamide, methacrylamide, 2-acrylamide-2-methylpropanesulfonic acid and its salts, vinylether, and vinyl carboxylate.

6. The adhesive composition as claimed in any one of claims 1 to 5, wherein the polymer comprising a unit derived from N-vinylamide as a major component is a cross-linked N-vinylamide homopolymer or a cross-linked copolymer of N-vinylamide with at least one monomer selected from the group consisting of acrylic acid and its salts, methacrylic acid and its salts, acrylic acid ester, methacrylic acid ester, acrylonitrile, acrylamide, methacrylamide, 2-acrylamide-2-methylolpropanesulfonic acid and its salts, vinylether, and vinyl carboxylate.

7. The adhesive composition as claimed in any one of claims 1 to 6, wherein the vinyl resin emulsion is an emulsion of a homopolymer of vinyl acetate or an emulsion of a copolymer of vinyl acetate with at least one monomer selected from the group consisting of acrylic acid ester, methacrylic acid ester, acrylamide, vinyl alkylcarboxylate containing alkyl group having 3 to 10 carbon atoms, and ethylene.

8. The adhesive composition as claimed in any one of claims 1 to 7, wherein the vinyl resin emulsion is an emulsion of a homopolymer of acrylic acid ester or methacrylic acid ester or an emulsion of a copolymer of these, or an emulsion of a copolymer of acrylic acid ester and/or methacrylic acid ester with at least one monomer selected from the group consisting of styrene, acrylamide, methacrylamide and acrylonitrile

9. The adhesive composition as claimed in any one of claims 1 to 8, wherein the composition contains 0.1 to 30% by weight of a filler based on the sum of the total solids content weight of the polymer comprising a unit derived from N-vinylamide as a major component and the vinyl resin emulsion.

## Patentansprüche

1. Klebemittelzusammensetzung, erhältlich durch Mischen einer wässrigen Lösung oder Dispersion eines Polymers, welches eine Einheit umfasst, die von mindestens einem der N-Vinylamide der allgemeinen Formel (1) abgeleitet ist: 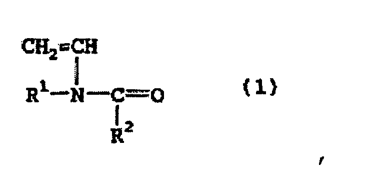 worin R¹ und R² unabhängig ein Wasserstoffatom, eine Methylgruppe oder eine Ethylgruppe darstellen, und einer Vinylharzemulsion in einem Gewichtsverhältnis der Feststoffe von 5:95 bis 65:35.

2. Klebemittelzusammensetzung nach Anspruch 1, worin das N-Vinylamid N-Vinylacetamid ist.

3. Klebemittelzusammensetzung nach Anspruch 1 oder 2, worin die Zusammensetzung eine wässrige Lösung umfasst, die das Polymer, welches als Hauptkomponente eine Einheit umfasst, die vom N-Vinylamid abgeleitet ist, und die Vinylharzemulsion in einem Gewichtsverhältnis der Feststoffe von 5:95 bis 65:35 enthält.

4. Klebemittelzusammensetzung, welche ein Pulver eines Polymers, das als Hauptkomponente eine Einheit umfasst, die von mindestens einem der N-Vinylamide der allgemeinen Formel (1) abgeleitet ist: 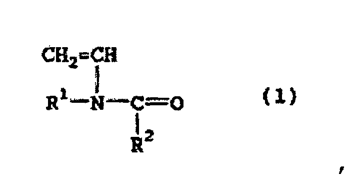 worin R¹ und R² unabhängig ein Wasserstoffatom, ein Methylgruppe oder eine Ethylgruppe darstellen, und ein Pulver, erhältlich durch Sprühtrocknen einer Vinylharzemulsion, in einem Gewichtsverhältnis der Feststoffe von 5:95 bis 65:35 umfasst, wobei die Zusammensetzung bei Gebrauch in eine wässrige Lösung umgewandelt wird.

5. Klebemittelzusammensetzung nach einem der Ansprüche 1 bis 4, worin das Polymer, welches als Hauptkomponente eine Einheit umfasst, die von N-Vinylamid abgeleitet ist, ein N-Vinylamidhomopolymer oder ein Copolymer des N-Vinylamids mit mindestens einem Monomer ist, welches aus der Gruppe ausgewählt ist, die aus Acrylsäure und ihren Salzen, Methacrylsäure und ihren Salzen, Acrylsäureester, Methacrylsäureester, Acrylnitril, Acrylamid, Methacrylamid, 2-Acrylamid-2-methylpropansulfonsäure und ihren Salzen, Vinylether und Vinylcarboxylat besteht.

6. Klebemittelzusammensetzung nach einem der Ansprüche 1 bis 5, worin das Polymer, welches als Hauptkomponente eine Einheit umfasst, die vom N-Vinylamid abgeleitet ist, ein vernetztes N-Vinylamidhomopolymer oder ein vernetztes Copolymer des N-Vinylamids mit mindestens einem Monomer ist, welches aus der Gruppe ausgewählt ist, die aus Acrylsäure und ihren Salzen, Methacrylsäure und ihren Salzen, Acrylsäureester, Methacrylsäureester, Acrylnitril, Acrylamid, Methacrylamid, 2-Acrylamid-2-methylpropansulfonsäure und ihren Salzen, Vinylether und Vinylcarboxylat besteht.

7. Klebemittelzusammensetzung nach einem der Ansprüche 1 bis 6, worin die Vinylharzemulsion eine Emulsion eines Homopolymers des Vinylacetats oder eine Emulsion eines Copolymers des Vinylacetats mit mindestens einem Monomer ist, welches aus der Gruppe ausgewählt ist, die aus Acrylsäureester, Methylacrylsäureester, Acrylamid, Vinylalkylcarboxylat, welches eine Alkylgruppe mit 3 bis 10 Kohlenstoffatomen enthält, und Ethylen besteht.

8. Klebemittelzusammensetzung nach einem der Ansprüche 1 bis 7, worin die Vinylharzemulsion eine Emulsion eines Homopolymers des Acrylsäureesters oder des Methacrylsäureesters oder eine Emulsion eines Copolymers davon oder eine Emulsion eines Copolymers des Acrylsäureesters und/oder Methacrylsäureesters mit mindestens einem Monomer ist, welches aus der Gruppe ausgewählt ist, die aus Styrol, Acrylamid, Methylacrylamid und Acrylonitril besteht.

9. Klebemittelzusammensetzung nach einem der Ansprüche 1 bis 8, worin die Zusammensetzung 0,1 bis 30 Gew.-Teile eines Füllmaterials enthält, bezogen auf die Summe des Gesamtgewichts des Feststoffgehalts an Polymeren, welches als Hauptkomponente eine Einheit umfasst, die vom N-Vinylamid abgeleitet ist, und der Vinylharzemulsion.

## Revendications

1. Composition adhésive pouvant être obtenue en mélangeant une solution aqueuse ou une dispersion d'un polymère comprenant une unité dérivée d'au moins l'un des N-vinylamides représentés par la formule générale (1) : 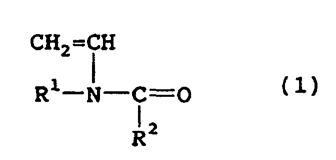 dans laquelle R¹ et R² représentent indépendamment un atome d'hydrogène, un groupe méthyle, ou un groupe éthyle et une émulsion de résine vinylique dans un rapport pondéral des solides de 5/95 à 65/35.

2. Composition adhésive telle que revendiquée dans la revendication 1, dans laquelle le N-vinylamide est le N-vinylacétamide.

3. Composition adhésive telle que revendiquée dans la revendication 1 ou 2, dans laquelle ladite composition comprend une solution aqueuse contenant le polymère comprenant une unité dérivée du N-vinylamide comme composant majeur et l'émulsion de résine vinylique dans un rapport pondéral des solides de 5/95 à 65/35.

4. Composition adhésive comprenant une poudre d'un polymère comprenant une unité dérivée d'au moins l'un des N-vinylamides représentés par la formule générale (1):
dans laquelle R¹ et R² représentent indépendamment un atome d'hydrogène, un groupe méthyle, ou un groupe éthyle comme composant majeur et une poudre pouvant être obtenue en séchant par atomisation une émulsion de résine vinylique dans un rapport pondéral des solides de 5/95 à 65/35 et dans laquelle ladite composition est convertie en une solution aqueuse lors de l'utilisation.

5. Composition adhésive telle que revendiquée dans l'une quelconque des revendications 1 à 4, dans laquelle le polymère comprenant une unité dérivée du N-vinylamide comme composant majeur est un homopolymère de N-vinylamide ou un copolymère de N-vinylamide avec au moins un monomère choisi dans le groupe consistant en l'acide acrylique et ses sels, l'acide méthacrylique et ses sels, un ester d'acide acrylique, un ester d'acide méthacrylique, l'acrylonitrile, l'acrylamide, le méthacrylamide, l'acide 2-acrylamide-2-méthylpropanesulfonique et ses sels, le vinyléther, et le carboxylate de vinyle.

6. Composition adhésive telle que revendiquée dans l'une quelconque des revendications 1 à 5, dans laquelle le polymère comprenant une unité dérivée du N-vinylamide comme composant majeur est un homopolymère de N-vinylamide réticulé ou un copolymère réticulé de N-vinylamide avec au moins un monomère choisi dans le groupe consistant en l'acide acrylique et ses sels, l'acide méthacrylique et ses sels, un ester d'acide acrylique, un ester d'acide méthacrylique, l'acrylonitrile, l'acrylamide, le méthacrylamide, l'acide 2-acrylamide-2-méthylolpropanesulfonique et ses sels, le vinyléther, et le carboxylate de vinyle.

7. Composition adhésive telle que revendiquée dans l'une quelconque des revendications 1 à 6, dans laquelle l'émulsion de résine vinylique est une émulsion d'un homopolymère d'acétate de vinyle ou une émulsion d'un copolymère d'acétate de vinyle avec au moins un monomère choisi dans le groupe consistant en un ester d'acide acrylique, un ester d'acide méthacrylique, l'acrylamide, l'alkylcarboxylate de vinyle contenant un groupe alkyle ayant de 3 à 10 atomes de carbone, et l'éthylène.

8. Composition adhésive telle que revendiquée dans l'une quelconque des revendications 1 à 7, dans laquelle l'émulsion de résine vinylique est une émulsion d'un homopolymère d'ester d'acide acrylique ou d'ester d'acide méthacrylique ou une émulsion d'un copolymère de ces composés, ou une émulsion d'un copolymère d'ester d'acide acrylique et/ou d'ester d'acide méthacrylique avec au moins un monomère choisi dans le groupe consistant en le styrène, l'acrylamide, le méthacrylamide et l'acrylonitrile.

9. Composition adhésive telle que revendiquée dans l'une quelconque des revendications 1 à 8, dans laquelle la composition contient de 0,1 à 30 % en poids d'une charge en fonction de la somme du poids total des solides du polymère comprenant une unité dérivée du N-vinylamide comme composant majeur et l'émulsion de résine vinylique.
